(19) **Europäisches Patentamt / European Patent Office / Office européen des brevets**

(11) **EP 2 416 490 B1**

(12) **FASCICULE DE BREVET EUROPEEN**

(45) Date de publication et mention
de la délivrance du brevet:
**01.05.2019 Bulletin 2019/18**

(51) Int Cl.:
**H02P 29/50** (2016.01)   **H02P 15/02** (2006.01)
**H02P 21/00** (2016.01)   **B60L 15/02** (2006.01)

(21) Numéro de dépôt: **11306003.2**

(22) Date de dépôt: **01.08.2011**

(54) **CHAÎNE DE TRACTION POUR UN VÉHICULE DE TRANSPORT, NOTAMMENT FERROVIAIRE, ET PROCÉDÉ DE COMMANDE D'UNE TELLE CHAÎNE**

ZUGKETTE FÜR EIN TRANSPORTFAHRZEUG, INSBESONDERE EIN SCHIENENFAHRZEUG, UND STEUERVERFAHREN FÜR EINE SOLCHE KETTE

POWER TRAIN FOR A TRANSPORT VEHICLE, IN PARTICULAR A RAILWAY VEHICLE, AND METHOD FOR CONTROLLING SUCH A CHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.08.2010 FR 1056370**

(43) Date de publication de la demande:
**08.02.2012 Bulletin 2012/06**

(73) Titulaire: **ALSTOM Transport Technologies**
**93400 Saint-Ouen (FR)**

(72) Inventeurs:
• **Desportes, Guillaume**
**64350 Moncaup (FR)**
• **Belin, Sébastien**
**64530 Ger (FR)**
• **Cypers, David**
**65310 Odos (FR)**
• **Giacomoni, Olivier**
**65290 Juillan (FR)**

(74) Mandataire: **Lavoix**
**2, place d'Estienne d'Orves**
**75441 Paris Cedex 09 (FR)**

(56) Documents cités:
**EP-A1- 1 662 650    EP-A1- 2 037 560**
**EP-A1- 2 139 106    JP-A- 63 299 793**

EP 2 416 490 B1

## Description

La présente invention concerne une chaîne de traction pour un véhicule de transport, notamment véhicule ferroviaire, comprenant :

- un moteur électrique comprenant un arbre, un stator et un rotor, le rotor étant mobile en rotation autour de l'axe de l'arbre ;
- un système d'alimentation recevant une tension continue d'entrée et délivrant une tension polyphasée au moteur, le système présentant un taux de modulation égal à l'amplitude en tension de chaque phase du moteur divisée par la tension continue d'entrée, et
- un capteur d'un signal représentatif de la vitesse de rotation du rotor.

L'invention concerne également un véhicule de transport, notamment véhicule ferroviaire, équipé d'une telle chaîne de traction.

L'invention concerne également un procédé de commande d'une chaîne de traction pour un véhicule de transport, notamment véhicule ferroviaire, comprenant un moteur électrique comprenant un arbre, un stator et un rotor, le rotor étant mobile en rotation autour de l'axe de l'arbre, le procédé comportant les étapes consistant à :

- alimenter le moteur en tension polyphasée, à l'aide d'un système d'alimentation recevant une tension continue d'entrée et délivrant ladite tension polyphasée, le système présentant un taux de modulation égal à l'amplitude en tension de chaque phase divisée par la tension continue d'entrée, et
- mesurer la vitesse de rotation du rotor.

Un moteur électrique d'une chaîne de traction pour véhicule de transport est généralement alimenté par une tension polyphasée par l'intermédiaire d'un système d'alimentation. Cette tension polyphasée est modulée en largeur d'impulsion. Les harmoniques de cette tension d'alimentation induisent des courants harmoniques dans le rotor.

Par exemple, EP-A1-2 037 560 décrit une chaîne de traction comprenant un moteur électrique synchrone à aimant permanent, un système d'alimentation recevant une tension continue d'entrée et délivrant une tension alternative au moteur.

EP-A1-1 662 650 décrit une chaîne de traction comprenant un moteur électrique synchrone, un système d'alimentation recevant une tension continue d'entrée et délivrant une tension triphasée au moteur, et un capteur de position à partir duquel une vitesse de rotation du moteur peut être calculée.

JP-A-63 299 793 décrit une chaîne de traction comprenant un moteur électrique synchrone et un système d'alimentation du moteur.

Toutefois, ces courants harmoniques induits engendrent des pertes par effet Joule et Foucault dans le rotor, provoquant un échauffement important du rotor.

L'invention a pour but de proposer une chaîne de traction permettant de réduire les pertes par effet Joule et Foucault dans le rotor.

A cet effet, l'invention a pour effet une chaîne de traction du type précité. La chaîne de traction comporte en outre des moyens de variation du taux de modulation propres à diminuer le taux de modulation par rapport au taux de modulation en l'absence de moyens de variation du taux de modulation, lorsque la vitesse de rotation du rotor appartient à un premier intervalle de valeurs inférieures à une valeur prédéterminée de transition, et propres à augmenter le taux de modulation par rapport au taux de modulation en l'absence de moyens de variation du taux de modulation, lorsque la vitesse de rotation du rotor appartient à un second intervalle de valeurs supérieures à la valeur prédéterminée de transition.

Suivant d'autres modes de réalisation, la chaîne de traction comprend une ou plusieurs des caractéristiques suivantes, prises isolément ou suivant toutes les combinaisons techniquement possibles :

- le rotor est propre à engendrer un champ magnétique propre de rotor selon une première direction magnétique et à être parcouru par un autre champ magnétique, un champ magnétique de rotor étant la somme du champ magnétique propre de rotor et de l'autre champ magnétique, le champ magnétique propre de rotor créant un flux propre de rotor au travers du rotor, et la chaîne de traction comporte des moyens de variation du flux du champ magnétique de rotor au travers du rotor, propres à diminuer le flux du champ magnétique de rotor par rapport au flux propre de rotor, lorsque la vitesse de rotation du rotor appartient au premier intervalle, et propres à augmenter le flux du champ magnétique de rotor par rapport au flux propre de rotor, lorsque la vitesse de rotation du rotor appartient au second intervalle ;
- le système d'alimentation comprend des premiers moyens de génération d'un courant polyphasé principal destiné à alimenter le stator, pour créer un champ magnétique principal de stator orienté selon une deuxième direction magnétique distincte de la première direction magnétique, et des seconds moyens de génération d'un courant additionnel déphasé par rapport au courant principal et destiné à alimenter le stator, pour créer un champ magnétique secondaire de stator sensiblement orienté selon la première direction magnétique, le courant additionnel étant d'un premier signe pour diminuer le flux du champ magnétique de rotor par rapport au flux propre de rotor, et de signe opposé au premier signe pour augmenter le flux du champ magnétique de rotor par rapport au flux propre de rotor ;
- la chaîne de traction comporte des moyens d'acquisition d'un signal représentatif du couple moteur, et l'intensité du courant additionnel dépend de la valeur du couple moteur ;

- la valeur absolue de l'intensité du courant additionnel est plus faible pour les valeurs élevées du couple moteur que pour les valeurs basses du couple moteur ;
- la chaîne de traction comporte des moyens d'acquisition d'un signal représentatif du couple moteur, et le taux de modulation dépend de la valeur du couple moteur ;
- la valeur prédéterminée de transition est supérieure à la valeur de la vitesse de rotation du rotor correspondant au taux de modulation égal à 50% en l'absence de moyens de variation du taux de modulation ;
- la chaîne de traction comporte des moyens d'acquisition d'un signal représentatif du couple moteur, et la valeur prédéterminée de transition dépend de la valeur du couple moteur ;
- la valeur prédéterminée de transition est plus faible pour les valeurs élevées du couple moteur que pour les valeurs basses du couple moteur ;
- l'union du premier intervalle et du second intervalle est connexe ;
- le moteur est un moteur synchrone ;
- le moteur synchrone est un moteur synchrone à aimant permanent.

L'invention a également pour objet un véhicule de transport, notamment véhicule ferroviaire, comprenant une chaîne de traction telle que définie ci-dessus.

L'invention a également pour objet un procédé de commande du type précité. Le procédé de commande comporte en outre les étapes consistant à :

- diminuer le taux de modulation par rapport au taux de modulation en l'absence de moyens de variation du taux de modulation, lorsque la vitesse de rotation du rotor appartient à un premier intervalle de valeurs inférieures à une valeur prédéterminée de transition, et
- augmenter le taux de modulation par rapport au taux de modulation en l'absence de moyens de variation du taux de modulation, lorsque la vitesse de rotation du rotor appartient à un second intervalle de valeurs supérieures à la valeur prédéterminée de transition.

Suivant un autre mode de réalisation, le procédé de commande comprend la caractéristique suivante :

- le rotor est propre à engendrer un champ magnétique propre de rotor selon une première direction magnétique et à être parcouru par un autre champ magnétique, un champ magnétique de rotor étant la somme du champ magnétique propre de rotor et de l'autre champ magnétique, le champ magnétique propre de rotor créant un flux propre de rotor au travers du rotor, et le procédé de commande comporte les étapes consistant à :

- diminuer le flux du champ magnétique de rotor au travers du rotor par rapport au flux propre de rotor, lorsque la vitesse de rotation du rotor appartient au premier intervalle, et
- augmenter le flux du champ magnétique de rotor par rapport au flux propre de rotor, lorsque la vitesse de rotation du rotor appartient au second intervalle.

Ces caractéristiques et avantages de l'invention apparaîtront à la lecture de la description qui va suivre, donnée uniquement à titre d'exemple, et faite en référence aux dessins annexés, sur lesquels :

- la figure 1 est une représentation schématique d'une chaîne de traction selon l'invention, pour un véhicule de transport,
- la figure 2 est un organigramme représentant un procédé de commande de la chaîne de traction selon l'invention
- la figure 3 est une représentation schématique de courbes de pertes harmoniques dans un rotor d'un moteur de la chaîne de traction de la figure 1, d'un taux de modulation d'un système d'alimentation de la chaîne de la figure 1, et d'un courant additionnel déphasé en fonction de la vitesse du rotor,
- la figure 4 est un ensemble de courbes représentant l'évolution du courant additionnel déphasé de la figure 3 en fonction de la vitesse du rotor, pour des valeurs d'une consigne du couple moteur désiré variant de 0,5 % à 100 % par pas de 10 %,
- la figure 5 est un ensemble de courbes représentant l'évolution du taux de modulation de la figure 3 en fonction de la vitesse du rotor pour des consignes du couple moteur désiré variant de 0,5 % à 100 % par pas de 10 %,
- la figure 6 est un ensemble de courbes représentant les pertes harmoniques d'une chaîne de traction de l'état de la technique en fonction de la vitesse du rotor, pour des consignes du couple moteur désiré variant de 0,5 % à 100 % par pas de 10 %, et
- la figure 7 est un ensemble de courbes représentant les pertes harmoniques de la figure 2 en fonction de la vitesse du rotor, pour des consignes du couple moteur désiré variant de 0,5 % à 100 % par pas de 10 %.

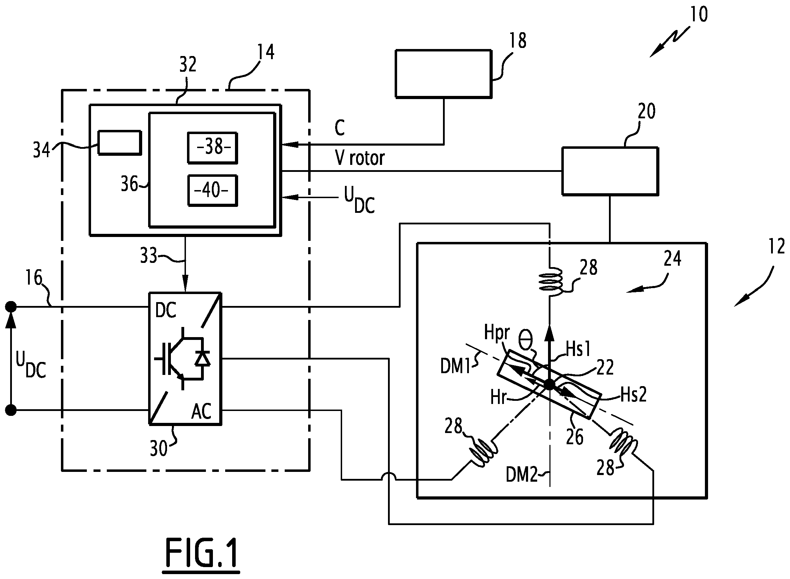

Une chaîne de traction 10 pour un véhicule ferroviaire, illustrée sur la figure 1, comprend un moteur électrique 12 et un système 14 d'alimentation du moteur, relié à un bus de tension continue d'alimentation d'entrée 16. La tension continue d'entrée est de tension $U_{DC}$.

La chaîne de traction 10 comporte également des moyens 18 d'acquisition d'un signal représentatif du couple moteur, par exemple d'un signal de consigne du couple moteur désiré C et un capteur 20 de mesure de la vitesse de rotation du rotor Vrotor.

Le moteur électrique 12 comporte un arbre d'entraînement 22, un stator 24 et un rotor 26 solidaire de l'arbre 22 et mobile en rotation autour de l'axe de l'arbre 22. Le moteur 12 est, par exemple, un moteur triphasé et synchrone. En variante, le moteur 12 est un moteur asynchrone.

Le capteur 20 est soit un capteur, notamment optique placé sur l'arbre 22 du moteur, soit un capteur prélevant dans l'électronique de commande du moteur 12 une information de vitesse du moteur, notamment une consigne de vitesse du moteur.

L'arbre 22 s'étend selon un axe de symétrie du moteur 12.

Le stator 24 comprend, par exemple, trois bobines électromagnétiques 28. Chaque bobine 28 est réalisée par enroulement d'un bobinage autour d'un noyau magnétique. Le stator 24 est propre à engendrer un champ tournant Hs1, également appelé champ magnétique principal de stator, sous l'activité d'un courant d'alimentation Ip adapté, également appelé courant triphasé principal.

Le rotor 26 est, par exemple, un aimant permanent d'axe de symétrie confondu avec l'axe de l'arbre 22, et le moteur 12 est un moteur synchrone à aimant permanent. En variante, le rotor 26 comporte une ou plusieurs bobines électromagnétiques alimentées par un courant continu.

L'aimant du rotor 26 est destiné à engendrer un champ magnétique propre de rotor Hpr orienté selon une première direction magnétique DM1 fixe par rapport au rotor 26. En variante, la ou les bobines électromagnétiques du rotor 26, alimentées en courant continu, sont propres à engendrer le champ magnétique propre de rotor Hpr selon la première direction magnétique DM1.

Le champ magnétique propre de rotor Hpr crée un flux propre de rotor ϕpr au travers du rotor 26, égal à la quantité d'un champ magnétique propre de rotor Hpr qui traverse pendant une seconde une section transversale du rotor 26. Le flux de rotor Φpr s'écrit sous la forme du produit scalaire du vecteur du champ magnétique de rotor Hpr et du vecteur de surface correspondant à la section transversale du rotor 26 :

$$\phi pr = \vec{H}pr \cdot \vec{S} \qquad (\text{I})$$

Le système d'alimentation 14 comprend un onduleur de tension 30 propre à alimenter le moteur 12, et un dispositif 32 de commande de l'onduleur.

L'onduleur de tension 30 est propre à convertir la tension continue d'entrée circulant sur le bus d'entrée 16 en une tension triphasée de sortie délivrée au moteur 12. L'onduleur 30 comporte, pour chaque phase en sortie, au moins deux interrupteurs commandables et destinés à convertir une tension continue en une tension alternative. Chaque interrupteur de l'onduleur 30 est, par exemple, un transistor bipolaire à grille isolée, également appelé transistor IGBT (de l'anglais Insulated Gâte Bipolar Transistor)..

Le dispositif de commande 32 est relié au moyen d'acquisition 18 pour recevoir le signal de consigne du couple moteur désiré C, et au capteur de mesure 20 pour recevoir le signal de mesure de la vitesse de rotation du rotor Vrotor. Le dispositif de commande 32 est relié à l'onduleur 30 pour délivrer un signal 33 de commande d'au moins deux interrupteurs de l'onduleur 30.

Le dispositif de commande 32 comporte une unité de traitement d'informations formée, par exemple, d'un processeur de données 34, associé à une mémoire 36. La mémoire 36 comporte un premier logiciel 38 de génération du courant triphasé principal Ip et un deuxième logiciel 40 de génération d'un courant additionnel déphasé Id.

En variante, les premiers moyens de génération 38 et les seconds moyens de génération 40 sont réalisés sous forme de composants logiques programmables, ou encore sous forme de circuits intégrés dédiés.

Chacune des phases du courant triphasé principal Ip généré par les premiers moyens 38 est destinée à alimenter une bobine électromagnétique 28 respective du stator pour créer un champ magnétique de bobine, la somme des trois champs de bobine formant le champ magnétique principal de stator Hs1. Le champ magnétique principal de stator Hs1 est un champ tournant autour de l'arbre 22 du moteur et orienté selon une deuxième direction magnétique DM2 distincte de la première direction magnétique DM1. L'orientation du champ magnétique principal de stator Hs1 est fonction de la tension d'alimentation des bobines électromagnétiques 28 respectives. La première direction magnétique DM1 forme avec la deuxième direction magnétique DM2 un angle θ dont dépend le couple du moteur.

Le courant additionnel Id généré par les seconds moyens 40 et déphasé par rapport au courant principal Ip est destiné à alimenter le stator 24 pour créer un champ magnétique secondaire de stator Hs2 sensiblement orienté selon la première direction magnétique DM1. Le champ magnétique secondaire de stator Hs2 est d'intensité inférieure à celle du champ magnétique propre de rotor Hpr.

Un champ magnétique de rotor Hr est la somme vectorielle du champ magnétique propre de rotor Hpr et du champ magnétique secondaire de stator Hs2 orientés selon la même première direction magnétique DM1, et s'écrit sous la forme :

$$\vec{H}r = \vec{H}pr + \vec{H}s2 \qquad (\text{II})$$

Autrement dit, lorsque le champ magnétique propre de rotor Hpr et le champ magnétique secondaire de stator Hs2 sont de sens opposés, l'intensité du champ magnétique de rotor Hr est la différence entre l'intensité du champ propre de rotor Hpr et celle du champ magnétique secondaire de stator Hs2. Lorsque le champ magnétique propre de rotor Hpr et le champ magnétique secondaire de stator Hs2 sont de même sens, l'intensité du champ magnétique de rotor Hr est la somme des intensités du champ propre de rotor Hpr et du champ magnétique secondaire de stator Hs2.

Le champ magnétique de rotor Hr crée un flux du champ magnétique de rotor Φr, également appelé flux de rotor, égal à la quantité du champ magnétique de rotor Hr qui traverse pendant une seconde une section transversale du rotor 26. Le flux de rotor Φr s'écrit sous la forme du produit scalaire du vecteur du champ magnétique de rotor Hr et du vecteur de surface correspondant à la section transversale du rotor 26 :

$$\phi r = \vec{H}r \cdot \vec{S} \qquad (III)$$

Un taux de modulation Tmod est égal à l'amplitude en tension de chaque phase du courant triphasé divisée par la tension $U_{DC}$ de la tension continue d'entrée. Le taux de modulation Tmod dépend de la tension d'alimentation du moteur 12, qui dépend elle-même du flux de rotor Φr d'après les équations de Park.

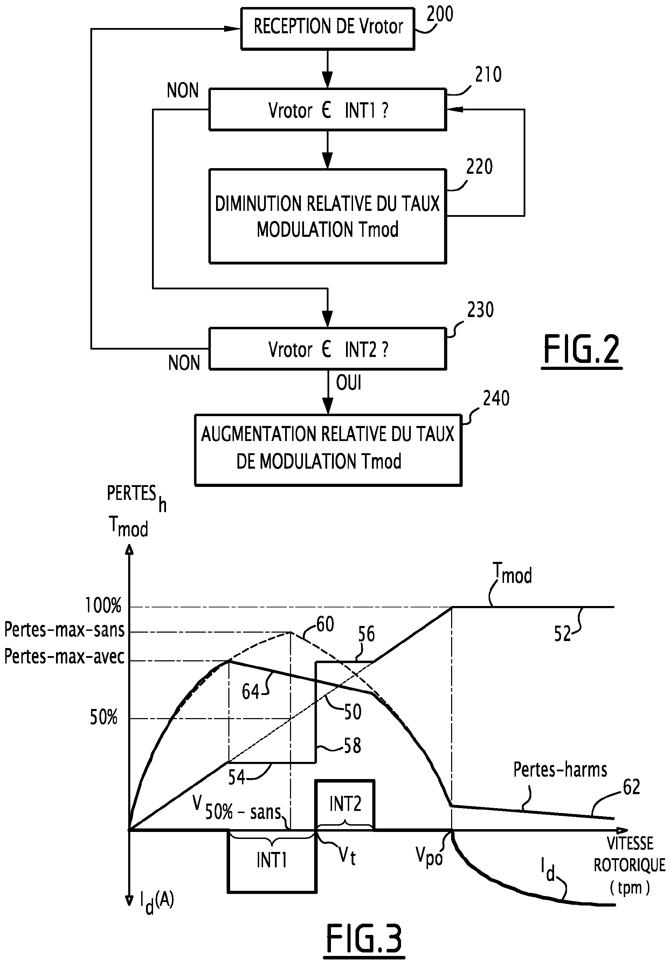

La figure 2 illustre un procédé de commande de la chaîne de traction 10.

A l'étape 200, le capteur de mesure 20 de la chaîne de traction reçoit le signal de mesure de la vitesse du rotor Vrotor.

A l'étape 210, le dispositif de commande 32 détermine si la valeur mesurée de la vitesse du rotor Vrotor appartient à un premier intervalle de valeurs INT1 de valeurs inférieures à une valeur prédéterminée de transition Vt. Le cas échéant à l'étape 220, des moyens de variation du taux de modulation Tmod diminuent le taux de modulation Tmod par rapport au taux de modulation en l'absence de moyens de variation du taux de modulation. La diminution relative du taux de modulation Tmod est obtenue, par exemple, par l'intermédiaire de moyens de variation du flux φr du champ magnétique de rotor. Autrement dit, lorsque la vitesse du rotor Vrotor appartient au premier intervalle INT1, les moyens de variation du flux diminuent le flux Φr du champ magnétique de rotor par rapport au flux propre de rotor φpr. Le flux Φr est alors inférieur au flux au flux propre de rotor φpr.

La variation du taux de modulation Tmod en fonction de la vitesse du rotor Vrotor est représentée sur la figure 3. La vitesse du rotor Vrotor est également appelée vitesse rotorique, ou encore vitesse de rotation du moteur, le rotor 26 étant l'élément mobile du moteur 12. La vitesse rotorique Vrotor est exprimée en tours par minute. La courbe en traits pointillés correspondant à la variation du taux de modulation Tmod sans mise en oeuvre des moyens de variation du taux de modulation, et la courbe en traits pleins correspondant à la variation du taux de modulation Tmod avec mise en oeuvre des moyens de variation du taux de modulation pour le premier intervalle INT1 et un deuxième intervalle INT2 de valeurs supérieures à la valeur prédéterminée de transition Vt.

La courbe en traits pointillés comporte une première portion 50 pour laquelle le taux de modulation Tmod est une fonction affine de la vitesse rotorique Vrotor, le taux de modulation variant de 0 % à 100 %, et une deuxième portion 52 pour laquelle le taux de modulation Tmod est sensiblement constant et égal à 100 % pour une vitesse rotorique Vrotor supérieure à une valeur de pleine onde Vpo. La deuxième portion 52 est également appelée portion de pleine onde et correspond à un fonctionnement du moteur 12 en régime de pleine onde.

La courbe en traits pleins est sensiblement confondue avec la courbe en traits pointillés pour les valeurs de la vitesse rotorique Vrotor n'appartenant pas au premier intervalle INT1 et au deuxième intervalle INT2. Pour les valeurs de la vitesse rotorique Vrotor appartenant à l'intervalle INT1, le taux de modulation Tmod comporte une portion de défluxage 54 pour laquelle le taux de modulation Tmod est sensiblement constant et inférieur aux valeurs correspondantes de la première portion 50 de la courbe en pointillés.

Autrement dit, l'étape 220 correspond à la portion de défluxage 54.

Dans le cas où la valeur mesurée de la vitesse rotorique Vrotor n'appartient pas au premier intervalle de valeurs INT1, le dispositif de commande 32 passe à l'étape 230, où il détermine si la valeur de la vitesse rotorique Vrotor appartient au deuxième intervalle INT2 de valeurs supérieures à la valeur prédéterminée de transition Vt. Le cas échéant à l'étape 240, les moyens de variation du taux de modulation Tmod augmentent le taux de modulation Tmod par rapport au taux de modulation en l'absence de moyens de variation du taux de modulation. L'augmentation relative du taux de modulation Tmod est obtenue, par exemple, par l'intermédiaire des moyens de variation du flux φr du champ magnétique de rotor. Autrement dit, lorsque la vitesse du rotor Vrotor appartient deuxième intervalle INT2, les moyens de variation du flux augmentent le flux Φr du champ magnétique de rotor par rapport au flux propre de rotor φpr. Le flux Φr est alors supérieur au flux propre de rotor φpr.

L'étape 240 correspond à une portion de surfluxage 56 de la courbe en traits pleins, pour laquelle le taux de modulation Tmod est sensiblement constant et supérieur aux valeurs correspondantes de la première portion 50 de la courbe en pointillés.

Si la valeur mesurée de la vitesse rotorique Vrotor n'appartient pas au deuxième intervalle de valeurs INT2, le dispositif de commande 32 ne modifie pas le taux de modulation Tmod et retourne à l'étape 200.

La portion de défluxage 54 et la portion de surfluxage 56 de la courbe en traits pleins de la figure 3 sont reliées entre elles par une portion de liaison 58 sensiblement linéaire et verticale. La portion de liaison 58 correspond à la valeur prédéterminée de transition Vt de la vitesse rotorique.

La valeur prédéterminée de transition Vt est supérieure à la valeur de la vitesse de rotation du rotor $V_{50\%\_sans}$ correspondant au taux de modulation égal à 50% en l'absence de moyens de variation du taux de modulation.

Pour diminuer le flux de rotor Φr par rapport au flux propre de rotor φpr, les seconds moyens 40 sont propres à générer un courant additionnel Id d'un premier signe, de sorte que le champ magnétique secondaire de stator Hs2 engendré est de sens opposé au champ propre de rotor Hpr. L'intensité du champ magnétique de rotor Hr est la différence entre l'intensité du champ propre de rotor Hpr et celle du champ magnétique secondaire de stator Hs2, de sorte que le flux de rotor Φr est inférieur au flux propre de rotor Φpr.

Pour augmenter le flux de rotor Φr par rapport au flux propre de rotor φpr, les seconds moyens 40 sont propres à générer un courant additionnel Id de signe opposé au premier signe, de sorte que le champ magnétique secondaire de stator Hs2 engendré et le champ propre de rotor Hpr sont de même sens. L'intensité du champ magnétique de rotor Hr est alors la somme de l'intensité du champ propre de rotor Hpr et de celle du champ magnétique secondaire de stator Hs2, de sorte que le flux de rotor Φr est supérieur au flux propre de rotor Φpr.

Autrement dit, le courant additionnel Id est du premier signe pour les valeurs de la vitesse rotorique Vrotor appartenant au premier intervalle INT1, et le courant additionnel Id est de signe opposé au premier signe pour les valeurs de la vitesse de rotation du rotor Vrotor appartenant au second intervalle INT2. Dans l'exemple de réalisation de la figure 3, le premier signe est le signe négatif.

L'union du premier intervalle INT1 et du second intervalle INT2 est, par exemple, connexe. En variante, le premier intervalle INT1 est disjoint du second intervalle INT2.

La variation des pertes harmoniques Pertes_harm dans le rotor 26 en fonction de la vitesse rotorique Vrotor est représentée sur la figure 3, la courbe en traits pointillés correspondant aux variations de pertes harmoniques sans mise en oeuvre des moyens de variation du taux de modulation, et la courbe en traits pleins correspondant à la variation de pertes harmoniques avec mise en oeuvre des moyens de variation du taux de modulation.

La courbe en traits pointillés des pertes harmoniques Pertes_harm présente une première portion 60 sensiblement en forme d'une parabole pour des valeurs de la vitesse rotorique Vrotor inférieures à la valeur de pleine onde Vpo et une deuxième portion 62 sensiblement linéaire et décroissante pour des valeurs de la vitesse rotorique Vrotor supérieures à la valeur de pleine onde Vpo. La première portion 60 présente une valeur maximale Pertes_max_sans pour un taux de modulation Tmod correspondant sensiblement égal à 50 %.

La courbe en traits pleins des pertes harmoniques Pertes_harm est sensiblement confondue avec la courbe en pointillés pour les valeurs de la vitesse rotorique Vrotor qui n'appartiennent pas aux intervalles INT1 et INT2. La courbe en traits pleins comporte une portion de variation du flux 64 correspondant aux valeurs de la vitesse rotorique Vrotor appartenant aux intervalles INT1 et INT2. La portion de variation du flux 64 est sensiblement linéaire et décroissante, et présente des valeurs inférieures à la portion 60 correspondante de la courbe en pointillés. La courbe en traits pleins présente une valeur maximale Pertes_max_avec pour une valeur de la vitesse rotorique Vrotor correspondant à la borne inférieure de l'intervalle INT1. La valeur maximale Pertes_max_avec de la courbe en traits pleins est inférieure à la valeur maximale Pertes_max_sans de la courbe en traits pointillés.

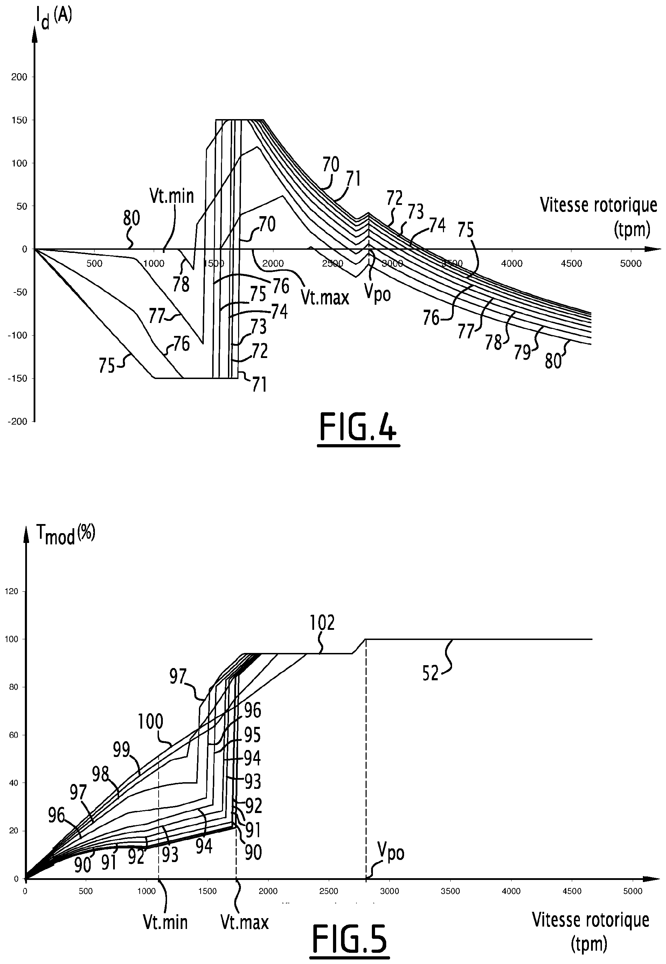

Sur la figure 4, les courbes 70 à 80 représentent l'évolution du courant déphasé Id en fonction de la vitesse rotorique Vrotor, pour des valeurs de la consigne du couple moteur désiré C variant de 0,5 % à 100 %, par pas de 10 %. Les courbes 70, 71, 72, 73, 74, 75, 76, 77, 78, 79 et 80 correspondent ainsi à une valeur de la consigne du couple moteur désiré C respectivement égale à 0,5 %, 10 %, 20 %, 30 %, 40 %, 50 %, 60 %, 70 %, 80 %, 90 % et 100 %.

L'intensité du courant additionnel Id dépend de la valeur de la consigne du couple moteur désiré C. La valeur absolue de l'intensité du courant additionnel Id est plus faible pour les valeurs élevées du couple moteur C que pour les valeurs basses du couple moteur C.

La valeur prédéterminée de transition Vt dépend de la valeur de la consigne du couple moteur désiré C. La valeur prédéterminée de transition Vt est plus faible pour les valeurs élevées du couple moteur C que pour les valeurs basses du couple moteur C. La valeur prédéterminée de transition Vt varie entre une valeur minimale Vt_min pour la valeur du couple moteur désiré C égale à 100 %, et une valeur maximale Vt_max lorsque le couple moteur désiré C est égal à 0,5 %. La valeur minimale Vt_min est sensiblement égale à 1100 tours/minute, et la valeur maximale Vt_max est sensiblement égale à 1800 tours/minute. Autrement dit, la valeur prédéterminée de transition Vt décroît de 1800 tours/minute jusqu'à 1100 tours/minute lorsque la valeur du couple moteur désiré C augmente de 0,5 % jusqu'à 100 %. La valeur prédéterminée de transition Vt n'est pas visible sur la figure 4 pour les valeurs du couple moteur désiré C égales à 90 % et 100%, car le courant additionnel Id est nul dans cette plage de vitesse.

La valeur de pleine onde Vpo est sensiblement indépendante de la valeur de la consigne du couple moteur désiré C, et est sensiblement égale à 2800 tours/minute.

Le premier intervalle INT1 correspond sensiblement aux valeurs comprises entre 0 tours/minute et 1500 tours/minute, et le deuxième intervalle INT2 correspond sensiblement aux valeurs comprises dans l'intervalle allant de 1500 tours/minute à 3300 tours/minute.

Sur la figure 5, les courbes 90 à 100 représentent l'évolution du taux de modulation Tmod exprimé en pourcentage, en fonction de la vitesse rotorique Vrotor, pour des valeurs de la consigne du couple moteur désiré C variant de 0,5 % à 100 %, par pas de 10 %. Les courbes 90, 91, 92, 93, 94, 95, 96, 97, 98, 99 et 100 correspondent ainsi à des valeurs de la consigne du couple moteur désiré respectivement égales à 0,5 %, 10 %, 20 %, 30 %, 40 %, 50 %, 60 %, 70 %, 80 %, 90 % et 100 %.

Le taux de modulation Tmod dépend de la valeur de la consigne du couple moteur désiré C. La pente de la portion de défluxage est plus faible pour les faibles valeurs de la consigne du couple moteur désiré C que pour les fortes valeurs de la consigne du couple moteur désiré C. En particulier, les portions de défluxage des courbes 90 à 98 sont sensiblement parallèles entre elles et de pente faible, de sorte que la variation du taux de modulation Tmod est faible pour l'intervalle de valeurs de la vitesse rotorique Vrotor compris entre 500 tours/minute et 1500 tours/minute. Pour les courbes 99 à 100, la portion de défluxage de la courbe du taux de modulation Tmod est sensiblement une fonction affine de la vitesse rotorique Vrotor, et le taux de modulation Tmod varie de manière plus importante dans l'intervalle de valeurs de la vitesse rotorique Vrotor compris entre 500 tours/minute et 1500 tours/minute, que pour les courbes 90 à 98. Cela est lié au courant additionnel Id qui est nul pour les courbes 99 et 100, dans la plage de vitesse inférieure à 1500 tours/minute.

De manière analogue à la figure 4, la valeur prédéterminée de transition Vt varie entre la valeur minimale Vt_min sensiblement égale à 1100 tours/minute pour la valeur du couple moteur désiré C égale à 100 %, et la valeur maximale Vt_max sensiblement égale à 1800 tours/minute pour la valeur du couple moteur désiré C égale à 0,5 %.

Chacune des courbes 90 à 100 présente une portion horizontale 102, distincte de la portion de défluxage 56 de la figure 3, pour laquelle la valeur du taux de modulation Tmod est sensiblement constante et égale à 95 %. Cette portion horizontale 102 permet de respecter des contraintes de température qui sont fonction des pertes de commutations de l'onduleur 30. Pour les courbes 90 à 98, la portion horizontale 102 correspond à des valeurs de la vitesse rotorique Vrotor comprises entre environ 1900 tours/minute et 2700 tours/minute. Pour la courbe 99, la portion horizontale 102 correspond à des valeurs de la vitesse rotorique Vrotor comprises entre environ 2000 tours/minute et 2700 tours/minute. Pour la courbe 100, la portion horizontale 102 correspond à des valeurs de la vitesse rotorique Vrotor comprises entre environ 2300 tours/minute et 2700 tours/minute.

Chacune des courbes 90 à 100 comporte la portion de pleine onde 52 pour laquelle la valeur du taux de modulation Tmod est sensiblement constante et égale à 100 %. La valeur de pleine onde Vpo est sensiblement identique pour toutes les valeurs de la consigne du couple moteur désiré C, et est sensiblement égale à 2800 tours/minute.

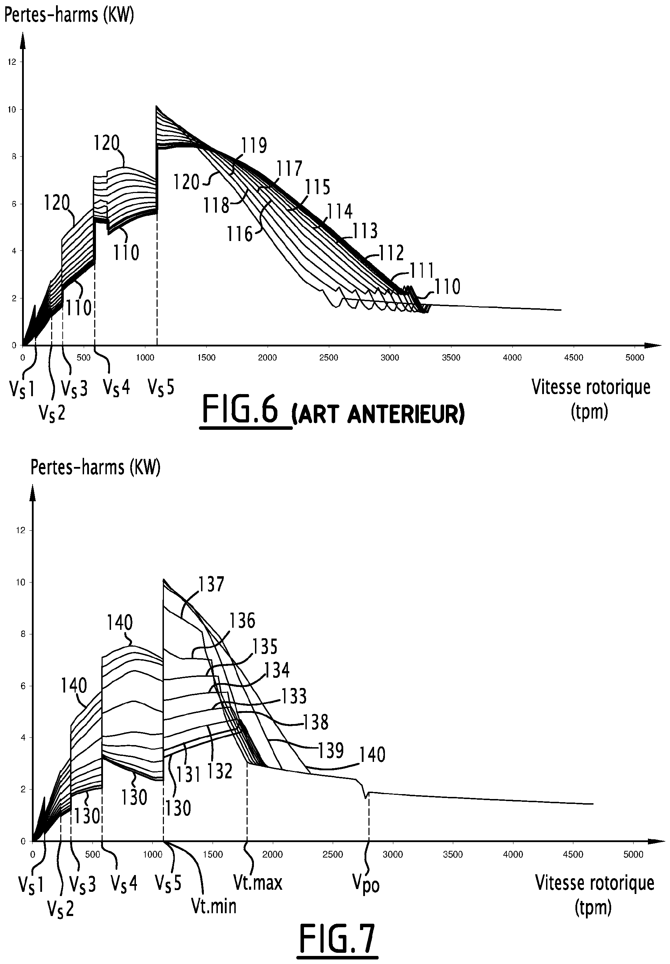

Sur la figure 6, les courbes 110 à 120 représentent l'évolution des pertes harmoniques Pertes_harm dans le rotor d'un moteur de l'état de la technique, exprimées en kW, en fonction de la vitesse rotorique Vrotor, pour des valeurs de la consigne du couple moteur désiré C variant de 0,5 % à 100 %, par pas de 10 %. Les courbes 110, 111, 112, 113, 114, 115, 116, 117, 118, 119 et 120 correspondent ainsi à une valeur de la consigne du couple moteur désiré C respectivement égale à 0,5 %, 10 %, 20 %, 30 %, 40 %, 50 %, 60 %, 70 %, 80 %, 90 % et 100 %.

Chacune des courbes 110 à 120 de pertes harmoniques Pertes_harm comporte des portions sensiblement verticales pour cinq valeurs distinctes Vs1, Vs2, Vs3, Vs4 et Vs5 de la vitesse rotorique. Ces portions verticales correspondent à des variations importantes des pertes harmoniques Pertes_harm, notamment pour les valeurs Vs3, Vs4 et Vs5 de la vitesse rotorique. La tension triphasée délivrée au moteur est, par exemple, modulée en largeur d'impulsion. Les cinq valeurs distinctes Vs1, Vs2, Vs3, Vs4 et Vs5 de la vitesse rotorique correspondent chacune à un changement d'une modulation de largeur d'impulsion à une autre modulation de largeur d'impulsion.

Les courbes 110 à 120 sont sensiblement proches les unes des autres, et l'écart maximal de pertes harmoniques entre les courbes extrémales 110 et 120 est sensiblement inférieur à 2kW pour toute valeur de la vitesse rotorique inférieure à 2000 tours/minute. Entre 2000 tours/minute et 2500 tours/minute, l'écart maximal de pertes harmoniques entre les courbes extrémales 110 et 120 est sensiblement compris entre 2kW et 3kW. Au-delà de 2500 tours/minute, l'écart maximal de pertes harmoniques entre les courbes extrémales 110 et 120 diminue progressivement de 2kW jusqu'à un écart sensiblement nul au-delà de 3350 tours/minute.

Pour des valeurs de la vitesse rotorique comprises entre Vs3 et Vs4, les pertes harmoniques sont sensiblement comprises entre 2,5 kW et 3,5 kW pour la courbe 110 et entre 4,5 kW et 5,75 kW pour la courbe 120.

Pour des valeurs de la vitesse rotorique comprises entre Vs4 et Vs5, les pertes harmoniques sont sensiblement comprises entre 5 kW pour la courbe 110 et 7 kW pour la courbe 120.

Les pertes harmoniques passent par un maximal compris entre 8,25 kW pour la courbe 110 et 10 kW pour la courbe 120, pour la valeur de la vitesse rotorique égale à Vs5.

La valeur de pleine onde Vpo dépend de la valeur de la consigne du couple moteur désiré C, lorsque les moyens de variation du taux de modulation ne sont pas mis en oeuvre. La valeur de pleine onde Vpo est comprise entre environ 2600 tours/minute pour la valeur de la consigne du couple moteur désiré C égale à 100%, et environ 3350 tours/minute pour la valeur de la consigne du couple moteur désiré C égale à 0,5%. Pour des valeurs de la vitesse rotorique supérieures à la plus grande valeur de pleine onde Vpo, les courbes 110 à 120 sont sensiblement confondues, et présentent des valeurs de pertes harmoniques Pertes_harm inférieures à 2 kW.

Sur la figure 7, les courbes 130 à 140 représentent l'évolution des pertes harmoniques Pertes_harm dans le rotor 26 du moteur, exprimées en kW, en fonction de la vitesse rotorique Vrotor, pour des valeurs de la consigne du couple moteur désiré C variant de 0,5 % à 100 %, par pas de 10 %. Les courbes 130, 131, 132, 133, 134, 135, 136, 137, 138, 139 et 140 correspondent ainsi à une valeur de la consigne du couple moteur désiré C respectivement égale à 0,5 %, 10 %, 20 %, 30 %, 40 %, 50 %, 60 %, 70 %, 80 %, 90 % et 100 %.

De manière analogue aux figures 4 et 5, la valeur prédéterminée de transition Vt varie entre la valeur minimale Vt_min sensiblement égale à 1100 tours/minute pour la valeur du couple moteur désiré C égale à 100 %, et la valeur maximale Vt_max sensiblement égale à 1800 tours/minute pour la valeur du couple moteur désiré C égale à 0,5 %. La valeur de pleine onde Vpo est sensiblement égale à 2800 tours/minute pour toutes les courbes 130 à 140.

Pour chacune des courbes 130 à 140, la valeur de transition Vt correspond à un point d'inflexion de la courbe de pertes harmoniques correspondante. Les valeurs de pertes harmoniques Pertes_harm diminuent de manière importante pour chacune des courbes 130 à 140, lorsque la vitesse rotorique Vrotor est supérieure à la valeur de transition Vt.

De manière analogue à la figure 6, chacune des courbes 130 à 140 de pertes harmoniques Pertes_harm comporte des portions sensiblement verticales pour cinq valeurs distinctes Vs1, Vs2, Vs3, Vs4 et Vs5 de la vitesse rotorique, correspondant chacune à un changement d'une modulation de largeur d'impulsion à une autre modulation de largeur d'impulsion. Ces portions verticales correspondent à des variations importantes des pertes harmoniques Pertes_harm, notamment pour les valeurs Vs4 et Vs5 de la vitesse rotorique.

L'écart maximal de pertes harmoniques entre les courbes extrémales 130 et 140 est sensiblement supérieur à 3kW pour toute valeur de la vitesse rotorique comprise entre Vs3 et Vt_max. Pour des valeurs de la vitesse rotorique supérieures à la valeur de pleine onde Vpo, les courbes 130 à 140 sont sensiblement confondues, et présentent des valeurs de pertes harmoniques Pertes_harm inférieures à 2 kW.

Pour des valeurs de la vitesse rotorique comprises entre Vs3 et Vs4, les pertes harmoniques sont sensiblement comprises entre 2 kW pour la courbe 130 et entre 4,5 kW et 5,75 kW pour la courbe 140.

Pour des valeurs de la vitesse rotorique comprises entre Vs4 et Vs5, les pertes harmoniques sont sensiblement comprises entre 2,25 kW et 3 kW pour la courbe 130 et 7 kW pour la courbe 140.

Les pertes harmoniques passent par un maximal compris entre 4 kW pour la courbe 130 pour la valeur de la vitesse rotorique égale à Vt_max, et 10 kW pour la courbe 140 pour la valeur de la vitesse rotorique égale à Vs5.

Les pertes harmoniques correspondant aux courbes 120 et 140 sont sensiblement identiques pour toutes les valeurs de la vitesse rotorique.

Les pertes harmoniques correspondant à la courbe 130 sont nettement inférieures à celles correspondant à la courbe 110.

Ainsi, les pertes harmoniques avec mise en oeuvre des moyens de variation du taux de modulation sont d'autant plus faibles que la valeur de la consigne du couple moteur est faible. Les pertes harmoniques avec mise en oeuvre des moyens de variation du taux de modulation sont comparativement beaucoup plus faibles que celles sans mise en oeuvre des moyens de variation du taux de modulation pour les basses valeurs de la consigne du couple moteur, que pour les valeurs élevées valeurs de la consigne du couple moteur.

Ainsi, la chaîne de traction 10 selon l'invention permet de diminuer le flux Φr du champ magnétique de rotor par rapport au flux propre du rotor Φpr, lorsque la vitesse de rotation du rotor Vrotor appartient au premier intervalle INT1. Cette diminution du flux de rotor Φr entraîne une diminution de la tension d'alimentation du moteur. Cette diminution de la tension d'alimentation du moteur 12 entraîne une évolution plus lente du taux de modulation Tmod dans la portion de défluxage 54. Dans cette portion de défluxage 54, la valeur du taux de modulation Tmod est inférieure à 50 %, ce qui permet de réduire les pertes harmoniques Pertes_harm. En effet, la valeur du taux de modulation Tmod égale à 50 % est sensiblement la valeur qui génère les pertes harmoniques les plus importantes.

La chaîne de traction 10 selon l'invention permet également d'augmenter le flux du champ de rotor Φr par rapport au flux propre du rotor Φpr, lorsque la vitesse de rotation du rotor Vrotor appartient à un second intervalle INT2 de valeurs supérieures à la valeur prédéterminée de transition Vt. Cette augmentation du flux de rotor Φr entraîne une augmentation de la tension d'alimentation, et par conséquent une évolution plus rapide du taux de modulation Tmod dans la portion de surfluxage 56. Cette évolution plus importante du taux de modulation Tmod n'entraîne pas une augmentation des pertes harmoniques Pertes_harm, puisque la portion de surfluxage 56 succède à la portion de défluxage 54 pour laquelle la valeur du taux de modulation égale à 50% et son maximum correspondant de pertes harmoniques ont été évités.

On conçoit ainsi que la chaîne de traction selon l'invention permet de réduire les pertes engendrées par effet Joule et Foucault dans le rotor.

L'homme du métier comprendra que l'invention s'applique plus généralement à un onduleur 30 de tension polyphasée, propre à alimenter un moteur polyphasé 12.

## Revendications

1. Chaîne de traction (10) pour un véhicule de transport, notamment un véhicule ferroviaire, comprenant :

   - un moteur électrique (12) comprenant un arbre (22), un stator (24) et un rotor (26), le rotor (26) étant mobile en rotation autour de l'axe de l'arbre (22)
   - un système d'alimentation (14) recevant une tension continue d'entrée ($U_{DC}$) et délivrant une tension polyphasée au moteur (12), le système (14) présentant un taux de modulation (Tmod) égal à l'amplitude en tension de chaque phase du moteur divisée par la tension continue d'entrée ($U_{DC}$), et
   - un capteur (20) d'un signal représentatif de la vitesse de rotation du rotor (Vrotor),

   **caractérisée en ce qu'**elle comporte des moyens de variation du taux de modulation (Tmod) propres à diminuer le taux de modulation (Tmod) par rapport au taux de modulation en l'absence de moyens de variation du taux de modulation , lorsque la vitesse de rotation du rotor (Vrotor) appartient à un premier intervalle (INT1) de valeurs inférieures à une valeur prédéterminée de transition (Vt), et propres à augmenter le taux de modulation (Tmod) par rapport au taux de modulation en l'absence de moyens de variation du taux de modulation , lorsque la vitesse de rotation du rotor (Vrotor) appartient à un second intervalle (INT2) de valeurs supérieures à la valeur prédéterminée de transition (Vt).

2. Chaîne de traction (10) selon la revendication 1, **caractérisée en ce que** le rotor (26) est propre à engendrer un champ magnétique propre de rotor (Hpr) selon une première direction magnétique (DM1) et à être parcouru par un autre champ magnétique (Hs2), un champ magnétique de rotor (Hr) étant la somme du champ magnétique propre de rotor (Hpr) et de l'autre champ magnétique (Hs2), le champ magnétique propre de rotor (Hpr) créant un flux propre de rotor (φpr) au travers du rotor (26), et **en ce qu'**elle comporte des moyens de variation du flux (φr) du champ magnétique de rotor (Hr) au travers du rotor (26), propres à diminuer le flux (φr) du champ magnétique de rotor (Hr) par rapport au flux propre de rotor (φpr), lorsque la vitesse de rotation du rotor (Vrotor) appartient au premier intervalle (INT1), et propres à augmenter le flux (φr) du champ magnétique de rotor (Hr) par rapport au flux propre de rotor (φpr), lorsque la vitesse de rotation du rotor (Vrotor) appartient au second intervalle (INT2).

3. Chaîne de traction (10) selon la revendication 2, **caractérisée en ce que** le système d'alimentation (14) comprend des premiers moyens (38) de génération d'un courant polyphasé principal (Ip) destiné à alimenter le stator (24), pour créer un champ magnétique principal de stator (Hs1) orienté selon une deuxième direction magnétique (DM2) distincte de la première direction magnétique (DM1), et des seconds moyens (40) de génération d'un courant additionnel (Id) déphasé par rapport au courant principal (Ip) et destiné à alimenter le stator (24), pour créer un champ magnétique secondaire de stator (Hs2) sensiblement orienté selon la première direction magnétique (DM1), le courant additionnel (Id) étant d'un premier signe pour diminuer le flux (φr) du champ magnétique de rotor (Hr) par rapport au flux propre de rotor (φpr), et de signe opposé au premier signe pour augmenter le flux (φr) du champ magnétique de rotor (Hr) par rapport au flux propre de rotor (φpr).

4. Chaîne de traction (10) selon la revendication 3, **caractérisée en ce qu'**elle comporte des moyens (18) d'acquisition d'un signal représentatif du couple moteur (C), et **en ce que** l'intensité du courant additionnel (Id) dépend de la valeur du couple moteur (C).

5. Chaîne de traction (10) selon la revendication 4, **caractérisée en ce que** la valeur absolue de l'intensité du courant additionnel (Id) est plus faible pour les valeurs élevées du couple moteur (C) que pour les valeurs basses du couple moteur (C).

6. Chaîne de traction (10) selon l'une quelconque des revendications précédentes, **caractérisée en ce qu'**elle comporte des moyens (18) d'acquisition d'un signal représentatif du couple moteur (C), et **en ce que** le taux de modulation (Tmod) dépend de la valeur du couple moteur (C).

7. Chaîne de traction (10) selon l'une quelconque des revendications précédentes, **caractérisée en ce que** la valeur prédéterminée de transition (Vt) est supérieure à la valeur de la vitesse de rotation du rotor ($V_{50\%\_sans}$) correspondant au taux de modulation égal à 50% en l'absence de moyens de variation du taux de modulation.

8. Chaîne de traction (10) selon l'une quelconque des revendications précédentes, **caractérisée en ce qu'**elle comporte des moyens (18) d'acquisition d'un signal représentatif du couple moteur (C), et **en ce que** la valeur prédéterminée de transition (Vt) dépend de la valeur du couple moteur (C).

9. Chaîne de traction (10) selon la revendication 8, **caractérisée en ce que** la valeur prédéterminée de transition (Vt) est plus faible pour les valeurs élevées du couple moteur (C) que pour les valeurs basses du couple moteur (C).

**10.** Chaîne de traction (10) selon l'une quelconque des revendications précédentes, **caractérisée en ce que** l'union du premier intervalle (INT1) et du second intervalle (INT2) est connexe.

**11.** Chaîne de traction (10) selon l'une quelconque des revendications précédentes, **caractérisée en ce que** le moteur (12) est un moteur synchrone.

**12.** Chaîne de traction (10) selon la revendication 11, **caractérisée en ce que** le moteur synchrone (12) est un moteur synchrone à aimant permanent.

**13.** Véhicule de transport, notamment véhicule ferroviaire, **caractérisé en ce qu'**il comprend une chaîne de traction (10) selon l'une quelconque des revendications précédentes.

**14.** Procédé de commande d'une chaîne de traction (10) pour un véhicule de transport, notamment un véhicule ferroviaire, comprenant un moteur électrique (12) comprenant un arbre (22), un stator (24) et un rotor (26), le rotor (26) étant mobile en rotation autour de l'axe de l'arbre (22), le procédé comportant les étapes consistant à :

- alimenter le moteur (12) en tension polyphasée, à l'aide d'un système d'alimentation (14) recevant une tension continue d'entrée ($U_{DC}$) et délivrant ladite tension polyphasée, le système (14) présentant un taux de modulation (Tmod) égal à l'amplitude en tension de chaque phase divisée par la tension continue d'entrée ($U_{DC}$), et
- mesurer la vitesse de rotation du rotor (Vrotor),

le procédé étant **caractérisé en ce qu'**il comporte les étapes consistant à :

- diminuer le taux de modulation (Tmod) par rapport au taux de modulation en l'absence de moyens de variation du taux de modulation (Tmod), lorsque la vitesse de rotation du rotor (Vrotor) appartient à un premier intervalle (INT1) de valeurs inférieures à une valeur prédéterminée de transition (Vt), et
- augmenter le taux de modulation (Tmod) par rapport au taux de modulation en l'absence de moyens de variation du taux de modulation (Tmod), lorsque la vitesse de rotation du rotor (Vrotor) appartient à un second intervalle (INT2) de valeurs supérieures à la valeur prédéterminée de transition (Vt).

**15.** Procédé de commande selon la revendication 14, **caractérisé en ce que** le rotor (26) est propre à engendrer un champ magnétique propre de rotor (Hpr) selon une première direction magnétique (DM1) et à être parcouru par un autre champ magnétique (Hs2), un champ magnétique de rotor (Hr) étant la somme du champ magnétique propre de rotor (Hpr) et de l'autre champ magnétique (Hs2), le champ magnétique propre de rotor (Hpr) créant un flux propre de rotor ($\phi$pr) au travers du rotor (26), et **en ce qu'**il comporte les étapes consistant à :

- diminuer le flux ($\phi$r) du champ magnétique de rotor (Hr) au travers du rotor (26) par rapport au flux propre de rotor ($\phi$pr), lorsque la vitesse de rotation du rotor (Vrotor) appartient au premier intervalle (INT1), et
- augmenter le flux ($\phi$r) du champ magnétique de rotor (Hr) par rapport au flux propre de rotor ($\phi$pr), lorsque la vitesse de rotation du rotor (Vrotor) appartient au second intervalle (INT2).

**Patentansprüche**

**1.** Antriebsstrang (10) für ein Transportfahrzeug, insbesondere ein Schienenfahrzeug, aufweisend:

- einen Elektromotor (12), welcher eine Welle (22), einen Stator (24) und einen Rotor (26) aufweist, wobei der Rotor (26) um die Achse der Welle (22) herum drehbewegbar ist,
- ein Versorgungssystem (14), welches eine Eingangsgleichspannung ($U_{DC}$) erhält und eine mehrphasige Spannung an den Motor (12) liefert, wobei das System (14) einen Modulationsgrad (Tmod), welcher gleich der Spannungsamplitude jeder Phase des Motors geteilt durch die Eingangsgleichspannung ($U_{DC}$) ist, aufweist, und

einen Sensor (20) eines Signals, welches repräsentativ für die Drehgeschwindigkeit des Rotors (Vrotor) ist,

**gekennzeichnet dadurch, dass** er Mittel zur Veränderung des Modulationsgrads (Tmod) aufweist, welche dazu geeignet sind, den Modulationsgrad (Tmod) gegenüber dem Modulationsgrad (Tmod) ohne Mittel zur Veränderung des Modulationsgrads zu verringern, wenn die Drehgeschwindigkeit des Rotors (Vrotor) zu einem ersten Intervall (INT1) von Werten, welche kleiner als ein vorbestimmter Übergangswert (Vt) sind, gehört, und dazu geeignet sind, den Modulationsgrad (Tmod) gegenüber dem Modulationsgrad (Tmod) ohne Mittel zur Veränderung des Modulationsgrads zu erhöhen, wenn die Drehgeschwindigkeit des Rotors (Vrotor) zu einem zweiten Intervall (INT2) von Werten, welche größer als der vorbestimmte Übergangswert (Vt) sind, gehört.

**2.** Antriebsstrang (10) gemäß dem Anspruch 1, **gekennzeichnet dadurch, dass** der Rotor (26) dazu geeignet ist, ein Rotor-Eigenmagnetfeld (Hpr) entlang einer ersten magnetischen Richtung (DM1) zu schaffen und durch ein anderes magnetisches Feld (Hs2) durchströmt zu werden, wobei ein Rotormagnetfeld (Hr) die Summe des Rotor-Eigenmagnetfelds (Hpr) und des anderen magnetischen Felds (Hs2) ist, wobei das Rotor-Eigenmagnetfeld (Hpr) einen Rotor-Eigenfluss ($\phi$pr) durch den Rotor (26) erzeugt, und dadurch, dass er Mittel zur Veränderung des Flusses ($\Phi$r) des Rotormagnetfelds (Hr) durch den Rotor (26) aufweist, welche dazu geeignet sind, den Fluss ($\Phi$r) des Rotormagnetfelds (Hr) gegenüber dem Rotor-Eigenfluss ($\phi$pr) zu verringern, wenn die Drehgeschwindigkeit des Rotors (Vrotor) zum ersten Intervall (INT1) gehört, und dazu geeignet sind, den Fluss ($\Phi$r) des Rotormagnetfelds (Hr) gegenüber dem Rotor-Eigenfluss ($\phi$pr) zu erhöhen, wenn die Drehgeschwindigkeit des Rotors (Vrotor) zu einem zweiten Intervall (INT2) gehört.

3. Antriebsstrang (10) gemäß dem Anspruch 2, **gekennzeichnet dadurch, dass** das Versorgungssystem (14) erste Mittel (38) zur Erzeugung eines mehrphasigen Hauptstroms (Ip), welcher dazu bestimmt ist, den Stator (24) zu versorgen, um ein Stator-Hauptmagnetfeld (Hs1), das entlang einer zweiten magnetischen Richtung (DM2), die von der ersten magnetischen Richtung (DM1) verschieden ist, ausgerichtet ist, zu erzeugen, und zweite Mittel (40) zur Erzeugung eines Zusatzstroms (Id), welcher bezüglich des Hauptstroms (Ip) phasenverschoben ist und dazu bestimmt ist, den Stator (24) zu versorgen, um ein Stator-Sekundärmagnetfeld (Hs2), welches im Wesentlichen entlang der ersten magnetischen Richtung (DM1) ausgerichtet ist, zu erzeugen, aufweist, wobei der Zusatzstrom (Id) von einem ersten Vorzeichen zum Verringern des Flusses ($\Phi$r) des Rotormagnetfelds (Hr) gegenüber dem Rotor-Eigenfluss ($\Phi$pr) ist, und von einem dem ersten Vorzeichen entgegengesetzten Vorzeichen zum Erhöhen des Flusses ($\Phi$r) des Rotormagnetfelds (Hr) gegenüber dem Rotor-Eigenfluss ($\Phi$pr) ist.

4. Antriebsstrang (10) gemäß dem Anspruch 3, **gekennzeichnet dadurch, dass** er Mittel (18) zum Erlangen eines Signals, welches repräsentativ für das Motordrehmoment (C) ist, aufweist, und dadurch, dass die Höhe des Zusatzstroms (Id) von dem Wert des Motordrehmoments (C) abhängt.

5. Antriebsstrang (10) gemäß dem Anspruch 4, **gekennzeichnet dadurch, dass** der Absolutwert der Höhe des Zusatzstroms (Id) für die höheren Werte des Motordrehmoments (C) niedriger ist als für die niedrigen Werte des Motordrehmoments (C).

6. Antriebsstrang (10) gemäß irgendeinem der vorhergehenden Ansprüche, **gekennzeichnet dadurch, dass** er Mittel (18) zum Erlangen eines Signals, welches repräsentativ für das Motordrehmoment (C) ist, aufweist, und dadurch, dass der Modulationsgrad (Tmod) von dem Wert des Motordrehmoments (C) abhängt.

7. Antriebsstrang (10) gemäß irgendeinem der vorhergehenden Ansprüche, **gekennzeichnet dadurch, dass** der vorbestimmte Übergangswert (Vt) größer als der Wert der Drehgeschwindigkeit des Rotors (V$_{50\%\_sans}$), welcher mit dem Modulationsgrad gleich 50% ohne Mittel zur Veränderung des Modulationsgrads korrespondiert, ist.

8. Antriebsstrang (10) gemäß irgendeinem der vorhergehenden Ansprüche, **gekennzeichnet dadurch, dass** er Mittel (18) zum Erlangen eines Signals, welches repräsentativ für das Motordrehmoment (C) ist, aufweist, und dadurch, dass der vorbestimmte Übergangswert (Vt) von dem Wert des Motordrehmoments (C) abhängt.

9. Antriebsstrang (10) gemäß dem Anspruch 8, **gekennzeichnet dadurch, dass** der vorbestimmte Übergangswert (Vt) für die höheren Werte des Motordrehmoments (C) niedriger ist als für die niedrigen Werte des Motordrehmoments (C).

10. Antriebsstrang (10) gemäß irgendeinem der vorhergehenden Ansprüche, **gekennzeichnet dadurch, dass** die Vereinigung des ersten Intervalls (INT1) und des zweiten Intervalls (IN2) verbunden ist.

11. Antriebsstrang (10) gemäß irgendeinem der vorhergehenden Ansprüche, **gekennzeichnet dadurch, dass** der Motor (12) ein Synchronmotor ist.

12. Antriebsstrang (10) gemäß dem Anspruch 11, **gekennzeichnet dadurch, dass** der Synchronmotor (12) ein Synchronmotor mit Permanentmagneten ist.

13. Transportfahrzeug, insbesondere Schienenfahrzeug, **gekennzeichnet dadurch, dass** es einen Antriebsstrang (10) gemäß irgendeinem der vorhergehenden Ansprüche aufweist.

14. Verfahren zum Steuern eines Antriebsstrangs (10) für ein Transportfahrzeug, insbesondere ein Schienenfahrzeug, welcher einen Elektromotor (12), der eine Welle (22), einen Stator (24) und einen Rotor (26) aufweist, wobei der Rotor (26) um die Achse der Welle (22) herum drehbewegbar ist, aufweist, wobei das Verfahren die Schritte aufweist, welche bestehen aus:

- Versorgen des Motors (12) mit einer mehrphasigen Spannung mittels eines Versorgungssystems (14), welches eine Eingangsgleichspannung (U$_{DC}$) erhält und die mehrphasige Spannung liefert, wobei das System (14) einen Modulationsgrad (Tmod), welcher gleich der Spannungsamplitude jeder Phase des Motors geteilt durch die Eingangsgleichspannung ($U_{DC}$) ist, aufweist, und

- Messen der Drehgeschwindigkeit des Rotors (Vrotor),

wobei das Verfahren **dadurch gekennzeichnet ist, dass** es die Schritte aufweist, welche bestehen aus:

- Verringern des Modulationsgrads (Tmod) gegenüber dem Modulationsgrad (Tmod) ohne Mittel zur Veränderung des Modulationsgrads, wenn die Drehgeschwindigkeit des Rotors (Vrotor) zu einem ersten Intervall (INT1) von Werten, welche kleiner als ein vorbestimmter Übergangswert (Vt) sind, gehört, und

- Erhöhen des Modulationsgrads (Tmod) gegenüber dem Modulationsgrad (Tmod) ohne Mittel zur Veränderung des Modulationsgrads, wenn die Drehgeschwindigkeit des Rotors (Vrotor) zu einem zweiten Intervall (INT2) von Werten, welche größer als der vorbestimmte Übergangswert (Vt) sind, gehört.

15. Verfahren zum Steuern gemäß dem Anspruch 14, **gekennzeichnet dadurch, dass** der Rotor (26) dazu geeignet ist, ein Rotor-Eigenmagnetfeld (Hpr) entlang einer ersten magnetischen Richtung (DM1) zu schaffen und durch ein anderes magnetisches Feld (Hs2) durchströmt zu werden, wobei ein Rotormagnetfeld (Hr) die Summe des Rotor-Eigenmagnetfelds (Hpr) und des anderen magnetischen Felds (Hs2) ist, wobei das Rotor-Eigenmagnetfeld (Hpr) einen Rotor-Eigenfluss ($\Phi$pr) durch den Rotor (26) erzeugt, und dadurch, dass es die Schritte aufweist, welche bestehen aus:

- Verringern des Flusses ($\Phi$r) des Rotormagnetfelds (Hr) durch den Rotor (26) gegenüber dem Rotor-Eigenfluss ($\Phi$pr), wenn die Drehgeschwindigkeit des Rotors (Vrotor) zum ersten Intervall (INT1) gehört, und

- Erhöhen des Flusses ($\Phi$r) des Rotormagnetfelds (Hr) gegenüber dem Rotor-Eigenfluss ($\Phi$pr), wenn die Drehgeschwindigkeit des Rotors (Vrotor) zum zweiten Intervall (INT2) gehört.

**Claims**

1. A power train (10) for a transport vehicle, in particular a rail vehicle, comprising:

- an electric motor (12) comprising a shaft (22), a stator (24) and a rotor (26), the rotor (26) being rotatably mobile around the axis of the shaft (22)

- a power supply system (14) receiving direct input voltage ($U_{DC}$) and delivering a polyphase voltage to the motor (12), the system (14) having a modulation factor (Tmod) equal to the voltage amplitude of each phase of the motor divided by the direct input voltage ($U_{DC}$), and

- a sensor (20) of a signal representative of the rotational speed of the rotor (Vrotor),

**characterized in that** it includes a means for varying the modulation factor (Tmod) adapted to decrease the modulation factor (Tmod) relative to the modulation factor in the absence of a means for varying the modulation factor, when the speed of rotation of the rotor (Vrotor) belongs to a first interval (INT1) of values below a predetermined transition value (Vt), and adapted to increase the modulation factor (Tmod) relative to the modulation factor in the absence of a means for varying the modulation factor, when the speed of rotation of the rotor (Vrotor) belongs to a second interval (INT2) of values greater than the predetermined transition value (Vt).

2. The power train (10) according to claim 1, **characterized in that** the rotor (26) is adapted to create a proper magnetic rotor field (Hpr) in a first magnetic direction (DM1) and to be passed through by another magnetic field (Hs2), a magnetic rotor field (Hr) being the sum of the proper magnetic rotor field (Hpr) and the other magnetic field (Hs2), the proper magnetic rotor field (Hpr) creating a proper rotor flow ($\phi$pr) through the rotor (26), and **in that** the power train includes a means for varying the flow ($\phi$r) of the magnetic rotor field (Hr) through the rotor (26), adapted to decrease the flow ($\phi$r) of the magnetic rotor field (Hr) relative to the proper rotor flow ($\phi$pr), when the speed of rotation of the rotor (Vrotor) belongs to the first interval (INT1), and adapted to increase the flow ($\phi$r) of the magnetic rotor field (Hr) relative to the proper rotor flow ($\phi$pr), when the speed of rotation of the rotor (Vrotor) belongs to the second interval (INT2).

3. The power train (10) according to claim 2, **characterized in that** the power supply system (14) comprises a first means (38) for generating a main polyphase current (Ip) intended to power the stator (24), to create a main magnetic stator field (Hs1) oriented in a second magnetic direction (DM2) separate from the first magnetic direction (DM1), and a second means (40) for generating an additional out-of-phase current (Id) relative to the main current (Ip) and intended to power the stator (24), to create a secondary magnetic stator field (Hs2) substantially oriented in the first magnetic direction (DM1), the additional current (Id) having a first sign to decrease the flow ($\phi$r) of the magnetic rotor field (Hr) relative to the proper rotor flow ($\phi$pr), and a sign opposite the first sign to increase the flow ($\phi$r) of the magnetic rotor field (Hr) relative to the proper rotor flow ($\phi$pr).

4. The power train (10) according to claim 3, **characterized in that** it includes a means (18) for acquiring a signal representative of the motor torque (C), and **in that** the intensity of the additional current (Id) depends on the value of the motor torque (C).

5. The power train (10) according to claim 4, **characterized in that** the absolute value of the intensity of the additional current (Id) is lower for the high values of the motor torque (C) than for the low values of the motor torque (C).

6. The power train (10) according to any one of the preceding claims, **characterized in that** it includes a means (18) for acquiring a signal representative of the motor torque (C), and **in that** the modulation factor (Tmod) depends on the value of the motor torque (C).

7. The power train (10) according to any one of the preceding claims, **characterized in that** the predetermined transition value (Vt) is greater than the value of the speed of rotation of the rotor ($V_{50\%\_sans}$) corresponding to the modulation factor equal to 50%, in the absence of a means for varying the modulation factor.

8. The power train (10) according to any one of the preceding claims, **characterized in that** it includes a means (18) for acquiring a signal representative of the motor torque (C), and **in that** the predetermined transition value (Vt) depends on the value of the motor torque (C).

9. The power train (10) according to claim 8, **characterized in that** the predetermined transition value (Vt) is lower for high values of the motor torque (C) than for low values of the motor torque (C).

10. The power train (10) according to any one of the preceding claims, **characterized in that** the union of the first interval (INT1) and the second interval (INT2) is connected.

11. The power train (10) according to any one of the preceding claims, **characterized in that** the motor (12) is a synchronous motor.

12. The power train (10) according to claim 11, **characterized in that** the synchronous motor (12) is a permanent magnet synchronous motor.

13. A transport vehicle, in particular a rail vehicle, comprising a power train (10) according to any one of the preceding claims.

14. A method for controlling a power train (10) for a transport vehicle, in particular a rail vehicle, comprising an electric motor (12) comprising a shaft (22), a stator (24) and a rotor (26), the rotor (26) being rotatably mobile around the axis of the shaft (22), the method comprising the following steps:

- providing the motor (12) with polyphase voltage, using a power supply system (14) receiving a direct input voltage ($U_{DC}$) and delivering said polyphase voltage, the system (14) having a modulation factor (Tmod) equal to the voltage amplitude of each phase divided by the direct input voltage ($U_{DC}$), and
- measuring the speed of rotation of the rotor (Vrotor),

the method being **characterizing in that** it includes the following steps:

- decreasing the modulation factor (Tmod) relative to the modulation factor in the absence of a means for varying the modulation factor (Tmod), when the speed of rotation of the rotor (Vrotor) belongs to a first interval (INT1) of values below a predetermined transition value (Vt), and
- increasing the modulation factor (Tmod) relative to the modulation factor in the absence of a means for varying the modulation factor (Tmod), when the speed of rotation of the rotor (Vrotor) belongs to a second interval (INT2) of values greater than the predetermined transition value (Vt).

15. The control method according to claim 14, **characterized in that** the rotor (26) is adapted to create a proper magnetic rotor field (Hpr) in a first magnetic direction (DM1) and to be passed through by another magnetic field (Hs2), a magnetic rotor field (Hr) being the sum of the proper magnetic rotor field (Hpr) and the other magnetic field (Hs2), the proper magnetic rotor field (Hpr) creating a proper rotor flow ($\phi$pr) through the rotor (26), and **in that** it includes the following steps:

- decreasing the flow ($\phi$r) of the magnetic rotor field (Hr) through the rotor (26) relative to the proper rotor flow ($\phi$pr), when the speed of rotation of the rotor (Vrotor) belongs to the first interval (INT1), and
- increasing the flow ($\phi$r) of the magnetic rotor field (Hr) relative to the proper rotor flow ($\phi$pr), when the speed of rotation (Vrotor) of the rotor belongs to the second interval (INT2).

FIG.1

RECEPTION DE Vrotor — 200

NON

Vrotor ∈ INT1 ? — 210

DIMINUTION RELATIVE DU TAUX MODULATION Tmod — 220

Vrotor ∈ INT2 ? — 230

NON

OUI

AUGMENTATION RELATIVE DU TAUX DE MODULATION Tmod — 240

## FIG.2

PERTES$_h$

T$_{mod}$

100%

Pertes-max-sans

Pertes-max-avec

50%

T$_{mod}$

60

56

52

64

50

58

54

V$_{50\% - sans}$

Pertes-harms

62

INT2

INT1

V$_t$

V$_{po}$

I$_d$

VITESSE ROTORIQUE (tpm)

I$_d$(A)

## FIG.3

FIG.4

FIG.5

Pertes-harms (KW)

FIG.6 (ART ANTERIEUR)

Vitesse rotorique
(tpm)

Pertes-harms (KW)

FIG.7

Vitesse rotorique
(tpm)

**EP 2 416 490 B1**

## RÉFÉRENCES CITÉES DANS LA DESCRIPTION

**Documents brevets cités dans la description**

- EP 2037560 A1
- EP 1662650 A1
- JP 63299793 A